# FASCICULE DE BREVET EUROPEEN

(11) **EP 3 776 069 B1**
(45) Date de publication et mention de la délivrance du brevet: **18.06.2025**
(21) Numéro de dépôt: 19715471.9
(22) Date de dépôt: 03.04.2019
(51) Int. Cl.: G02C 7/04, G02C 11/00, G02B 27/00, A61B 3/113

(54) **SYSTEME OPTIQUE DE DETECTION ET DE SUIVI DE MOUVEMENTS OCULAIRES, MONTURE EXTERNE ET LENTILLE DE CONTACT CONNECTEE ASSOCIEES**
OPTISCHES SYSTEM ZUR DETEKTION UND VERFOLGUNG VON AUGENBEWEGUNGEN, ZUGEHÖRIGER EXTERNER RAHMEN UND ZUGEHÖRIGE VERBUNDENE KONTAKTLINSE
OPTICAL SYSTEM FOR DETECTING AND TRACKING EYE MOVEMENTS, ASSOCIATED EXTERNAL FRAME AND ASSOCIATED CONNECTED CONTACT LENS

(30) Priorité: 04.04.2018 FR 1852903
(43) Date de publication de la demande: 17.02.2021
(73) Titulaire: Institut Mines-Telecom, 75014 Paris (FR)
(72) Inventeur: DE BOUGRENET, Jean-Louis, 29820 Guilers (FR); LAHUEC, Cyril, 29810 Lampaul Plouarzel (FR); NOURRIT, Vincent, 29200 Brest (FR); SEGUIN, Fabrice, 29600 Morlaix (FR); FERRANTI, Francesco, 29200 Brest (FR)
(74) Mandataire: Cabinet Nony
(86) Numéro de dépôt international: PCT/EP2019/058355
(87) Numéro de publication internationale: WO 2019/193028

(56) Documents cités:
- US-A1- 2010 220 291
- US-A1- 2014 081 178
- US-A1- 2017 112 433

## Description

### Domaine technique

La présente invention concerne un système optique de détection et de suivi de mouvements oculaires d'un individu combiné à une monture externe associée à une lentille de contact connectée pour la mise en œuvre.

La lentille est un système complètement autonome et embarqué dans au moins un œil d'un individu. La monture peut être une monture de lunettes ou intégrée dans un casque de réalité augmentée ou encore un écran d'affichage tête haute (HUD acronyme anglais pour *« Head Up Display »).*

Les applications de la présente invention sont nombreuses parmi lesquelles on peut citer : la commande visuelle à distance, la supervision d'actes chirurgicaux, la détection de fatigue etc.

### Etat de la technique

La réalisation de dispositifs pour mesurer les paramètres d'attitude ou physiologiques du regard a fait et fait actuellement l'objet de nombreux développements.

En particulier, on trouve des réalisations de lentilles de contact intelligentes connectées : [1].

En général, les mesures de paramètres physiologiques, par exemple la mesure de pression intraoculaire IOP [2], [3], ou la mesure de fluides, de type glycémie [1] ont été proposées et font l'objet de produits commercialisés.

Par ailleurs, il a déjà été proposé d'intégrer une antenne passive dans une lentille de contact, pour détecter l'orientation du regard : [4].

La demande de brevet US2012/281181, au nom de SONY, décrit une mise en œuvre récente d'une telle intégration, pour des applications de jeux vidéo.

Pour la mesure concomitante de position et de cinétique de paramètres oculométriques, tels que l'orientation du regard, les clignements et saccades des paupières, il a déjà été proposé d'utiliser un dispositif n'ayant pas recours à des caméras embarquées, suivi d'un traitement d'images. On pourra se référer à la publication [5] ou encore à la demande de brevet US2012/0281181.

Les dispositifs proposés qui s'affranchissent des caméras embarquées sont judicieux. En effet, soit les caméras sont à bas coût et elles ne permettent pas alors la mesure des mouvements rapides du fait de leur fréquence d'acquisition trop basse et/ou qu'elles fournissent des images bruitées de mauvaise qualité, imposant alors des traitements ralentissant la cadence. Soit, elles sont performantes mais peu compactes et plus coûteuses.

Une autre technique qui a été remise à jour met en œuvre un système électro-oculographique, comme décrit dans les demandes de brevet US2012/0281181, US2014/0198382, US2018/0027176.

US 2014/081178 A1 représente un autre exemple comparatif.

Dans un tel système, la détermination de la fermeture et des positions de l'œil s'effectue par l'acquisition de données issues du bio-signal, par exemple un électro-oculogramme (EOG).

Pour ce faire, il a été proposé de mettre en œuvre une lentille de contact magnétique dont la détection du mouvement est assurée par des capteurs magnétiques. Ainsi, dans un mode de réalisation, un petit aimant déposé sur la surface de la lentille génère un champ magnétique qui est détecté par des capteurs magnétiques externes. Ces derniers sont disposés à des endroits précis en rapport avec le visage. Ces capteurs magnétiques détectent les faibles variations temporelles de l'intensité du champ dues aux mouvements de l'œil.

Encore plus récemment, il a été réalisé un système avec un circuit magnétique de détection de mouvement de l'œil pour capter une fluctuation de la puissance envoyée à la bobine intégrée sur la lentille de contact : [6]. Le circuit de détection est constitué par autre bobine montée dans un système externe, tel qu'une monture de lunette. La fluctuation est causée par un changement d'alignement entre la première et la seconde bobine et est ainsi utilisée pour détecter le mouvement des yeux. Ce système est proposé pour détecter l'endormissement consécutif à des mouvements oculaires rapides (REM).

Dans les applications de détection de mouvements oculaires, différents types de détection de mouvement peuvent être nécessaires, tels que le mouvement horizontal et vertical, et le mouvement de torsion. Selon la précision requise et le type de détection de mouvement, chaque technique de l'art antérieur a ses avantages et ses inconvénients.

Une autre solution consiste à associer une monture communicante à une lentille de contact connectée pourvue de capteurs optiques. La monture permet de communiquer des informations et de transférer de l'énergie électrique pour alimenter la lentille de contact. Cette association qui a déjà été proposée représente une alternative intéressante en termes d'intégration et de miniaturisation, compte tenu des dernières avancées de l'électronique flexible.

Ainsi, il a été proposé l'utilisation de diodes électroluminescentes (LED), émettant dans l'infrarouge pour ne pas perturber la vision, équipant une monture de lunettes, qui viennent éclairer des photorécepteurs infrarouges (PIR) d'une lentille de contact ou de la monture, pour mesurer la fréquence des clignements de l'œil.

Une première voie a consisté à interrompre le faisceau IR direct entre une LED et un PIR agencés de chaque côté de l'œil : [7].

Une autre voie retenue a mis en œuvre l'interruption d'un faisceau réfléchi par l'œil, depuis une LED jusqu'à un PIR agencés côte à côte sur la monture [8], [9].

Toutefois, ces deux systèmes ne permettent pas de détecter les mouvements de l'œil, indispensables dans une application d'oculométrie, avec une précision et vitesse suffisante.

Il existe donc un besoin d'améliorer les systèmes de détection et de suivi de mouvements oculaires, notamment en s'affranchissant des inconvénients précités.

Le but de l'invention est de répondre au moins partiellement à ce besoin.

### Exposé de l'invention

Pour ce faire, l'invention a pour objet un système optique de détection et de suivi de mouvements oculaires d'un individu selon la revendication 1.

De préférence, la monture comprend une antenne émettrice permettant de communiquer et d'apporter de l'énergie et l'émetteur comprend un élément de stockage de l'énergie électrique, par exemple une micro-batterie.

Ainsi, l'invention consiste essentiellement à intégrer directement des photorécepteurs, de préférence des photodiodes, ainsi qu'un circuit intégré autonome avec processeur dans une lentille de contact. La variation du signal fourni par les photorécepteurs (tension ou courant) permet non seulement de détecter la fermeture de la paupière mais les mouvements de l'œil.

Un traitement mathématique des signaux électriques issus des photorécepteurs, avantageusement par calcul de barycentres, par le processeur du circuit intégré dans la lentille permet d'obtenir une meilleure représentation des instants de fermeture/ouverture de la paupière et des positions relatives de l'œil.

Les barycentres peuvent être calculés à partir de deux photorécepteurs ou plus.

Le calcul des barycentres présente comme avantages d'être simple et ne pas être trop consommateur en énergie. Dans le cadre de l'invention, on peut prévoir d'autres types de traitement plus sophistiqués.

Le traitement du signal est réalisé pour chaque œil par une lentille de contact selon l'invention.

Puis, les signaux traités, indépendamment par chaque lentille, sont envoyés par communication sans fil et traités par un processeur intégré dans la monture. En corrélant les informations des signaux provenant des deux lentilles de contact, le processeur de la monture peut corriger des erreurs éventuelles et extraire les informations de vergence oculaire.

La solution selon l'invention peut permettre d'atteindre une précision angulaire inférieure à 1° et de vitesse angulaire inférieure à 500°/s, précisions non atteintes par les produits commerciaux actuels ou difficilement atteintes par les solutions selon l'état de l'art et en aucun cas dans un contexte de suivi de l'œil, embarqué qui est robuste et bas coût comme le système selon l'invention.

La monture peut être une monture de lunette ou d'un casque de réalité augmentée ou d'un écran d'affichage tête haute (HUD).

Les sources d'illumination sont de préférence des diodes électroluminescentes (DEL) ou des diodes laser à cavité verticale émettant par la surface (VCSEL).

Avantageusement, les sources d'illumination sont agencées sur toute la périphérie du cerclage de monture.

La lentille de contact est de préférence une lentille sclérale rigide ou hybride (semi-rigide). Une lentille sclérale présente l'avantage de ne pas bouger, ce qui est avantageux pour un tel dispositif embarqué sur l'œil.

De préférence, les sources d'illumination sont agencées de sorte que, lorsque la monture et la lentille de contact sont portées par l'individu, leurs cônes d'éclairage se chevauchent au moins partiellement au niveau de la lentille contact.

Selon une première variante, les sources d'illumination sont agencées de sorte que, lorsque la monture et la lentille de contact sont portées par l'individu, elles créent un éclairage sensiblement uniforme sur une surface plane tangente au centre de la lentille de contact.

Selon une deuxième variante, les sources d'illumination comprennent chacune une optique de mise en forme de sorte que, lorsque la monture et la lentille de contact sont portées par l'individu, elles créent chacune un faisceau d'éclairage plus concentré vers un point de la lentille de contact.

Les photorécepteurs sont de préférence des photodiodes sensibles, émettant un rayonnement dans l'infrarouge, constituées par des diodes électroluminescentes (DEL ou LED en anglais).

Selon un mode de réalisation avantageux, le système comprend un premier groupe de photorécepteurs, comprenant au moins quatre photorécepteurs agencés en étant répartis deux-à-deux de part et d'autre et à égale distance de l'axe de symétrie (X) de la lentille de contact, destiné à être positionné à l'horizontal lorsque la lentille est portée par l'œil.

Selon ce mode, les quatre photorécepteurs du premier groupe sont avantageusement répartis deux-à-deux de part et d'autre de l'axe de symétrie (Y) de la lentille de contact, destiné à être positionné à la verticale lorsque la lentille est portée par l'œil. Cet agencement de photorécepteurs du premier groupe permet de mesurer avec une grande précision les mouvements de l'œil dans le plan horizontal

Selon un deuxième mode de réalisation avantageux, le système comprend un deuxième groupe de photorécepteurs, comprenant au moins trois photorécepteurs agencés en étant alignés selon l'axe de symétrie (Y) de la lentille de contact, destiné à être positionné à la verticale lorsque la lentille est portée par l'œil.

Avantageusement, au moins deux photorécepteurs du deuxième groupe étant agencés dans la partie supérieure de la lentille de contact. Cet agencement de photorécepteurs du deuxième groupe permet de mesurer avec une grande précision l'orientation de l'œil dans l'axe vertical et les clignements de paupières.

Les photorécepteurs sont de préférence chacun surmontés d'un filtre chromatique dans l'infrarouge. Un tel filtre permet de s'affranchir des problèmes liés à la lumière ambiante (variations, bruits, etc.).

Selon un mode de réalisation avantageux, le traitement par le processeur du circuit intégré comprend le calcul des barycentres des contributions des signaux électriques des photodétecteurs.

L'émetteur de communication sans fil peut être un modulateur associé à une antenne radiofréquence (RF) ou un émetteur infrarouge (IrDA).

La lentille peut comprendre un ou plusieurs circuits de commande reconfigurables, de type SWIPT (acronyme anglais pour *« Simultaneous Wireless Information and Power Transfer »,* par consigne externe reçue par l'antenne RF de la lentille de contact. Ce(s) circuit(s) de commande permet(tent) de reconfigurer certaines de ses fonctions de la lentille et en interaction avec l'environnement extérieur.

La lentille de contact peut comprendre des moyens de récupération et de conversion d'énergie mécanique, lumineuse ou chimique provenant des larmes de l'œil, pour alimenter électriquement le circuit intégré.

La lentille comprenant des moyens de stockage de l'énergie électrique. Il peut s'agir d'une micro-batterie électrique.

Selon un mode de réalisation, la monture comprenant :
- un récepteur de communication sans fil, adapté pour recevoir les ondes émises par l'émetteur de ladite au moins une lentille de contact ;
- un processeur de traitement des signaux reçus par le récepteur.

Selon ce mode et une variante avantageuse, le système comprend deux lentilles de contact, destinée chacune à être portée par un œil de l'individu, le traitement du signal par le processeur de la monture étant adapté pour extraire les informations de vergence oculaire, de centre et de direction du regard dans l'espace.

Selon une autre variante avantageuse, le récepteur de communication sans fil est un modulateur associé à une antenne radiofréquence (RF) ou un émetteur infrarouge (IrDA).

Avantageusement, on peut prévoir d'alimenter en énergie électrique les composants de la ou des lentilles (photorécepteurs, circuit intégré) par transmission depuis l'antenne RF de la monture, l'énergie transmise étant alors récupérée par l'antenne RF de la ou des lentilles de contact. Dans ce cas, la lentille de contact dispose de l'électronique nécessaire pour convertir la puissance RF en puissance électrique d'alimentation.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique de face d'un exemple de système optique de détection et de suivi de mouvements oculaires selon l'invention avec une monture de lunettes et une lentille de contact conformes à l'invention dans leurs postions portées respectivement par le visage et l'œil d'un individu
- la figure 2 est une vue de face d'un exemple de lentille de contact selon l'invention;
- la figure 3 est une vue schématique de côté d'un système optique selon la figure 1 ;
- la figure 4 est une vue synoptique montrant le fonctionnement d'un système optique selon l'invention;
- la figure 5 est une vue de face d'une lentille de contact selon une variante avantageuse de l'invention.

Dans l'ensemble de la présente demande, les termes « vertical », « inférieur », « supérieur », « bas », « haut », « dessous » et « dessus » sont à comprendre par référence par rapport à un monture de lunettes et une lentille de contact telles qu'elles sont en configuration portées par un individu.

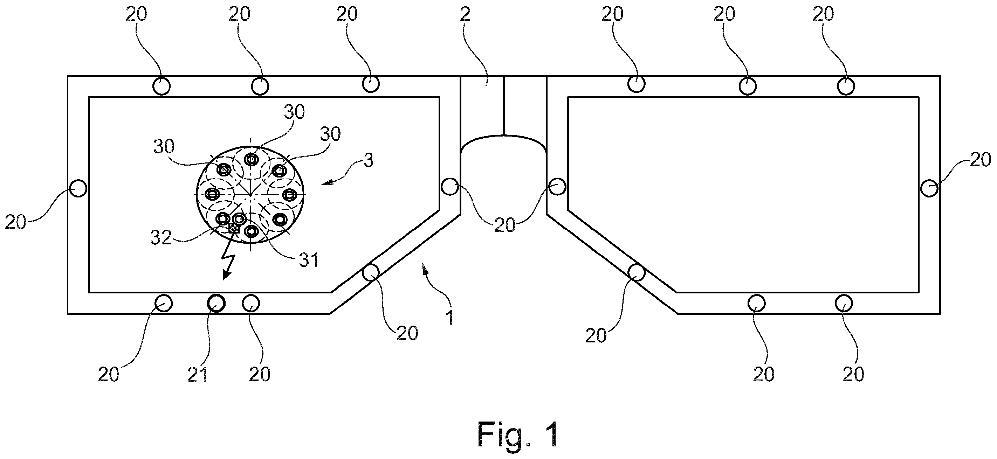

On a représenté à la figure 1, un système optique, désigné globalement par la référence 1, pour la détection et le suivi de mouvements oculaires d'un individu.

Dans un premier mode de réalisation, le système optique 1 selon l'invention comprend une monture de lunettes 2 et au moins une lentille de contact 3 portée par l'œil d'un individu à proximité du cerclage de la monture.

La monture 2 supporte des sources d'illumination 20 réparties sur toute la périphérie des deux cerclages. Ces sources peuvent être des diodes électroluminescentes (DEL) ou des diodes laser à cavité verticale émettant par la surface (VCSEL acronyme anglo-saxon pour « Vertical-Cavity Surface-Emitting laser »). La lumière émise dans l'infrarouge, par ces sources 20 peut être cohérente (VCSEL) ou faiblement cohérente (LED).

En outre, la monture 2 supporte un récepteur de communication sans fil 21. Il peut s'agir d'une antenne RF avec un démodulateur RF, ou d'un récepteur IrDA (acronyme anglo-saxon pour « Infrared Data Association »).

La monture 2 intègre en outre un processeur de traitement des signaux 22.

La lentille de contact 3, de préférence une lentille sclérale rigide ou hybride, supporte par encapsulation une pluralité de photorécepteurs 30, de préférence des photodiodes, agencées selon une ou plusieurs couronnes et secteurs angulaires différents.

Un émetteur de communication sans fil 31 adapté pour communiquer avec le récepteur 21 de la monture 2, est également encapsulé à l'intérieur de la lentille de contact 3.

L'émetteur 31 peut être une antenne RF ou un émetteur IrDA.

Un circuit intégré autonome 32 est également encapsulé à l'intérieur de la lentille de contact 3.

L'antenne RF de l'émetteur 31 peut agir comme une antenne de réception pour l'alimentation en énergie électrique des photorécepteurs 20 et du circuit intégré autonome 32. Cette énergie électrique peut être envoyée avantageusement depuis l'antenne RF 21 de la monture.

La lentille de contact 3 intègre de préférence une micro-batterie pour stocker éventuellement l'énergie électrique.

Chaque photorécepteur 30 peut être muni d'un filtre chromatique dans l'infrarouge 33, qui permet de s'affranchir des problèmes liés à la lumière ambiante (variations, bruits, ...).

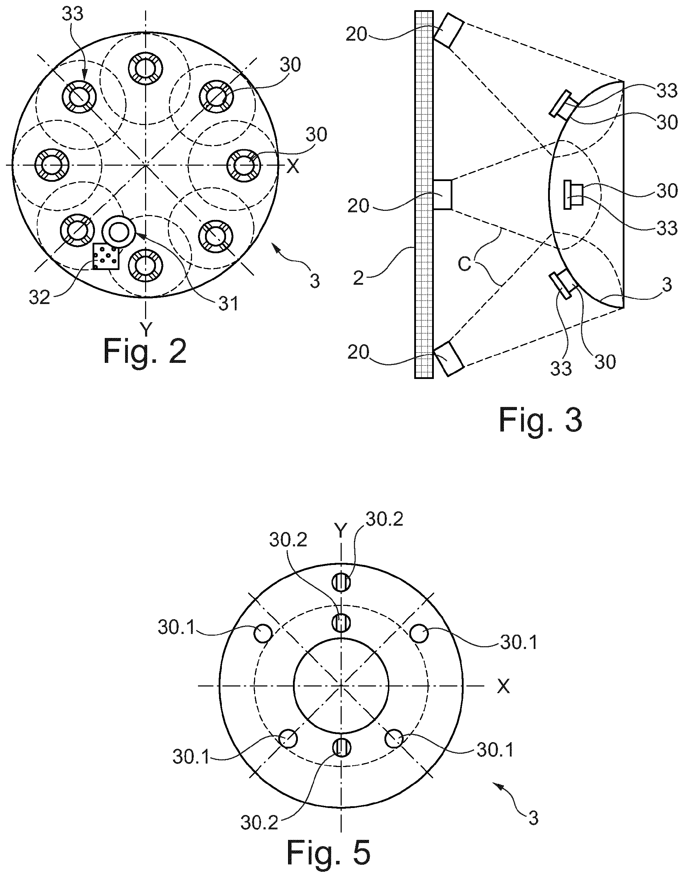

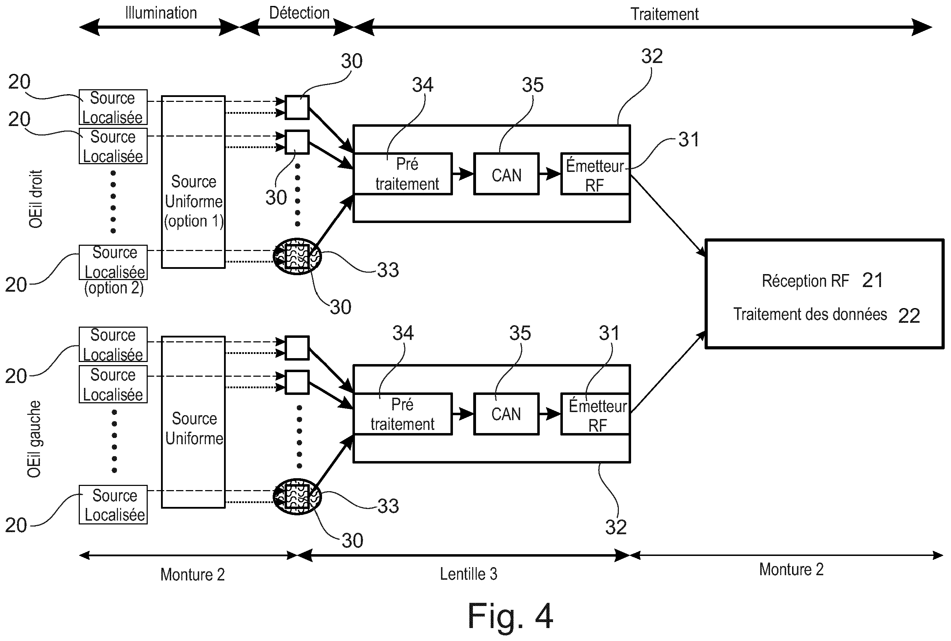

Le fonctionnement du système optique 1 qui vient d'être décrit va maintenant être décrit en relation avec les figures 3 et 4.

Au préalable, on procède à un calibrage du système 1, en éclairant les photorécepteurs 30, afin de s'affranchir d'une erreur de positionnement dès le départ.

La position initiale de l'œil, portant la lentille de contact 3 est ainsi calculée, ce qui permet par la suite une mesure directe sur la lentille. Par exemple, le traitement de calibrage peut comprendre le calcul d'un barycentre afin d'équilibrer les photo-courants lorsque l'utilisateur regarde droit devant lui à l'instant initial de mise en service

Lorsque la monture 2 est portée par le visage d'un individu et une lentille de contact 3 est portée par chaque œil de l'individu, chaque source d'illumination 20 peut émettre un cône d'éclairage C qui vient éclairer un ou plusieurs photorécepteurs 30.

Les cônes d'éclairage C des sources 20 peuvent se chevaucher au moins partiellement au niveau de la lentille contact. L'éclairage peut être réalisé en continu ou en mode pulsé, par exemple en mode stroboscopique.

Selon une première configuration (option 1 de la figure 4), les sources 20 créent un éclairage quasi uniforme sur une surface plane tangente au centre de la lentille de contact 3. Cela correspond à une position de l'œil en fixation à l'infini. Le nombre, la position et l'orientation de ces sources 20 sont déterminés par un critère de puissance lumineuse et d'uniformité de l'éclairement sur ladite surface dont la taille est équivalente à la base du plus grand ménisque de la lentille de contact.

Dans une deuxième configuration (option 2 de la figure 4), les sources 20 peuvent être équipées d'une optique de mise en forme créant un faisceau plus concentré ou générant une forme particulière, sur la lentille de contact. La taille de la tâche d'éclairement de chaque source 20 est en proportion de la taille de chaque photorécepteur 30 de la lentille de contact 3. Dans cette deuxième configuration, il n'y a pas de chevauchement entre les faisceaux d'illumination.

Chaque photorécepteur 30 reçoit alors un faisceau provenant d'une source d'illumination.

Dans ces deux configurations, l'éclairage est continu. On peut aussi envisager d'utiliser un signal modulé dans le temps.

Le processeur 34 intégré dans le circuit autonome 32 réalise alors un traitement analogique comprenant le calcul du barycentre ou des barycentres des contributions des signaux électriques (tension ou courant) des photodétecteurs 30.

Grâce à ce calcul, la variation du signal fourni par les photorécepteurs 30 permet non seulement de détecter les instants de fermeture/ouverture de la paupière et des positions relatives de l'œil, en fonction du positionnement desdits photodétecteurs.

Après avoir été converti en des signaux numériques par un convertisseur analogique-numérique 35, les signaux sont émis par l'émetteur 31, un émetteur RF dans l'exemple illustré de la figure 4.

Le récepteur 21 de communication sans fil, intégré dans la monture 2 reçoit alors les signaux provenant de l'émetteur 31 de chaque lentille de contact 3.

Le processeur 22 intégré dans la monture 2 réalise alors un traitement de corrélation entre les signaux provenant des deux lentilles de contact 3. Ce traitement de corrélation permet d'une part de corriger des erreurs éventuelles et d'autre part d'obtenir l'information de vergence oculaire de l'individu.

La figure 5 montre un agencement avantageux des photorécepteurs 20 sur une lentille de contact 3.

Selon cet agencement, au moins quatre photorécepteurs 30.1 sont agencés en étant répartis deux-à-deux de part et d'autre et à égale distance de l'axe de symétrie (X) de la lentille de contact 3. Cet axe de symétrie X est celui positionné à l'horizontale, lorsque la lentille 3 est portée par l'œil.

En outre, les quatre photorécepteurs 30.1 sont répartis deux-à-deux de part et d'autre de l'axe de symétrie (Y) de la lentille de contact 3. Cet axe de symétrie Y est celui positionné à la verticale, lorsque la lentille est portée par l'œil.

Les quatre photorécepteurs 30.1 ne sont pas nécessairement sur le même diamètre, comme cela ressort de la figure 5.

Ces quatre photorécepteurs 30.1 sont dédiés à mesurer les mouvements dans le plan horizontal.

Au moins trois photorécepteurs 30.2 sont agencés en étant alignés selon l'axe de symétrie (Y) de la lentille de contact. Comme visible sur la figure 5, il est préférable que ces photorécepteurs 30.2 soient plus nombreux dans la partie supérieure que dans la partie inférieure de la lentille 3 pour mesurer le clignement.

Au moins trois de ces photorécepteurs 30.2 sont dédiés à mesurer l'orientation dans l'axe vertical et les clignements de paupières.

Cet agencement combiné des photorécepteurs 30.1 et 30.2 permet d'extraire de manière très précise les variations d'orientation et de vitesse de la lentille de contact 3.

Bien entendu, l'invention n'est pas limitée aux exemples de mise en œuvre qui viennent d'être décrits.

D'autres variantes et améliorations peuvent être envisagées sans pour autant sortir du cadre de l'invention, telle que définie par les revendications.

Par exemple, la monture peut être intégrée dans un casque de réalité augmentée ou dans un écran d'affichage tête haute (HUD).

La lentille de contact peut intégrer une micro-batterie pour le stockage de l'énergie électrique nécessaire au fonctionnement des photorécepteurs et du circuit intégré autonome.

### REFERENCES CITEES

[1] : N. M. Farandos et al. ,"Contact lens sensors in ocular diagnostics", Advanced Healthcare Materials, vol. 4, no. 6, 4, pp. 792-810, April 2015.
[2] : J.-C. Chiou, Y.-C. Huang, G.-T. Yeh, "A capacitor-based sensor and a contact lens sensing system for intraocular pressure monitoring", Journal of Micromechanics and Microengineering, vol. 26, no. 1, 2016.
[3] : AC Sensimed "Triggerfish", http://www.sensimed.ch/fr/
[4] : D. A. Robinson, "A Method of Measuring Eye Movement Using a Sceral Search Coil in a Magnetic Field" IEEE Transactions on Bio-medical Electronics, vol. 10, no. 4, pp. 137-145, October 1963.
[5] : https://phys.org/news/2017-05-solution-precise-low-cost-eye-movement.html, 2017
[6] : E. Whitmire, L. Trutoiu, R. Cavin, D. Perek, B. Scally, J. Phillips, S. Patel,"EyeContact: Scleral Coil Eye Tracking for Virtual Reality", Proceedings of the 2016 ACM International Symposium on Wearable Computers, pp. 184-191, New York, NY, USA, 2016.
[7] : A. Frigerio, T. A. Hadlock, E. H. Murray, J. T. Heaton, "infrared- based blink detecting glasses for facial pacing: towards a bionic blink", JAMA facial plastic surgery, vol. 16, no. 3, pp. 211-218, 2014.
[8] : S. B. Ryann, K. L. Detweiler, K. H. Holland, M. A. Hord, V. Bracha, "A long-range, wide field-of-view infrared eyeblink detector", Journal of Neuroscience Methods, vol. 152, no. 1, pp. 74-82, 2006.
[9] : A. Nanditha Sree and A. Balaji Ganesh, "Experimental study report on Opto-electronic sensor based gaze tracker system," 2011 International Conference on Emerging Trends in Electrical and Computer Technology, Tamil Nadu, 2011, pp. 567-570.

## Revendications

1. Système optique (1) de détection et de suivi de mouvements oculaires d'un individu comprenant :
- une monture (2), destinée à être portée sur le visage de l'individu, comprenant :
• une pluralité de sources d'illumination (20),
- au moins une lentille de contact (3), destinée à être portée par un œil de l'individu en regard de la monture, dans laquelle sont encapsulés :
• un circuit intégré autonome (32), intégrant un processeur de traitement des signaux,
• une pluralité de photorécepteurs (30), adaptés pour être illuminés individuellement ou pas par les sources de la monture, les photorécepteurs étant reliés électriquement individuellement au circuit intégré, les photorécepteurs étant agencés dans la lentille de contact de sorte que le traitement par le processeur des signaux émis par les photorécepteurs permet de connaître les positions relatives et vitesses de rotation de l'œil ainsi que les clignements de la paupière de l'œil,
• un émetteur de communication sans fil (31), relié au processeur du circuit intégré, pour émettre les signaux traités par le processeur du circuit intégré et transférés vers un processeur externe.

2. Système optique (1) selon la revendication 1, la monture étant une monture de lunette ou d'un casque de réalité augmentée ou d'un écran d'affichage tête haute (HUD).

3. Système optique (1) selon la revendication 1 ou 2, les sources d'illumination étant des diodes électroluminescentes (DEL) ou des diodes laser à cavité verticale émettant par la surface (VCSEL).

4. Système optique (1) selon l'une des revendications précédentes, les sources d'illumination étant agencées sur toute la périphérie du cerclage de monture.

5. Système optique (1) selon l'une des revendications précédentes, la lentille de contact étant une lentille sclérale rigide ou hybride.

6. Système optique (1) selon l'une des revendications précédentes, les sources d'illumination étant agencées de sorte que, lorsque la monture et la lentille de contact sont portées par l'individu, leurs cônes d'éclairage se chevauchent au moins partiellement au niveau de la lentille contact.

7. Système optique (1) selon l'une des revendications 1 à 5, les sources d'illumination étant agencées de sorte que, lorsque la monture et la lentille de contact sont portées par l'individu, elles créent un éclairage sensiblement uniforme sur une surface plane tangente au centre de la lentille de contact dans une position de l'œil en fixation à l'infini, la taille de la surface étant équivalente à la base du plus grand ménisque de la lentille de contact.

8. Système optique (1) selon l'une des revendications 1 à 5, les sources d'illumination comprenant chacune une optique de mise en forme de sorte que, lorsque la monture et la lentille de contact sont portées par l'individu, elles créent chacune un faisceau d'éclairage plus concentré vers un point de la lentille de contact.

9. Système optique (1) selon l'une des revendications précédentes, les photorécepteurs étant des photodiodes sensibles à un rayonnement dans l'infrarouge.

10. Système optique (1) selon l'une des revendications précédentes, comprenant un premier groupe de photorécepteurs (30.1), comprenant au moins quatre photorécepteurs agencés en étant répartis deux-à-deux de part et d'autre et à égale distance de l'axe de symétrie (X) de la lentille de contact, destiné à être positionné à l'horizontal lorsque la lentille est portée par l'œil,
les quatre photorécepteurs du premier groupe étant de préférence répartis deux-à-deux de part et d'autre de l'axe de symétrie (Y) de la lentille de contact, destiné à être positionné à la verticale lorsque la lentille est portée par l'œil.

11. Système optique (1) selon l'une des revendications précédentes, comprenant un deuxième groupe de photorécepteurs (30.2), comprenant au moins trois photorécepteurs agencés en étant alignés selon l'axe de symétrie (Y) de la lentille de contact, destiné à être positionné à la verticale lorsque la lentille est portée par l'œil,
au moins deux photorécepteurs du deuxième groupe étant agencés dans la partie supérieure de la lentille de contact.

12. Système optique (1) selon l'une des revendications précédentes, les photorécepteurs étant chacun surmontés d'un filtre chromatique dans l'infrarouge (33).

13. Système optique (1) selon l'une des revendications précédentes, le traitement par le processeur du circuit intégré comprenant le calcul des barycentres des contributions des signaux électriques des photodétecteurs.

14. Système optique (1) selon l'une des revendications précédentes, l'émetteur de communication sans fil étant un modulateur associé à une antenne radiofréquence (RF) ou un émetteur infrarouge (IrDA).

15. Système optique (1) selon l'une des revendications précédentes, la monture comprenant :
- un récepteur de communication sans fil (21) adapté pour recevoir les ondes émises par l'émetteur de ladite au moins une lentille de contact ;
- un processeur (22) de traitement des signaux reçus par le récepteur.
- de préférence, deux lentilles de contact, destinés chacune à être porté par un œil de l'individu, le traitement du signal par le processeur de la monture étant adapté pour extraire les informations de vergence oculaire, de centre et de direction du regard dans l'espace.

## Patentansprüche

1. Optisches System (1) zur Detektion und Verfolgung von Augenbewegungen einer Person, beinhaltend:
- einen Rahmen (2), der dazu bestimmt ist, auf dem Gesicht der Person getragen zu werden, beinhaltend:
• eine Vielzahl von Beleuchtungsquellen (20),
- mindestens eine Kontaktlinse (3), die dazu bestimmt ist, von einem Auge der Person gegenüber dem Rahmen getragen zu werden, in der Folgendes verkapselt ist:
• eine autonome integrierte Schaltung (32), in die ein Signalverarbeitungsprozessor integriert ist,
• eine Vielzahl von Photorezeptoren (30), die dazu angepasst sind, durch die Quellen des Rahmens individuell beleuchtet zu werden oder nicht, wobei die Photorezeptoren mit der integrierten Schaltung individuell elektrisch verbunden sind, wobei die Photorezeptoren so in der Kontaktlinse angeordnet sind, dass es die Verarbeitung, durch den Prozessor, der durch die Photorezeptoren gesendeten Signale gestattet, die relativen Positionen und Drehgeschwindigkeiten des Auges sowie die Lidschläge des Auges zu bestimmen,
• ein drahtloser Kommunikationssender (31), der mit dem Prozessor der integrierten Schaltung verbunden ist, um die Signale zu senden, die durch den Prozessor der integrierten Schaltung verarbeitet und an einen externen Prozessor transferiert werden.

2. Optisches System (1) nach Anspruch 1, wobei der Rahmen ein Rahmen einer Brille oder eines Augmented-Reality-Helms oder eines Head-Up-Displays (HUD) ist.

3. Optisches System (1) nach Anspruch 1 oder 2, wobei die Beleuchtungsquellen Leuchtdioden (LED) oder Dioden vom Typ oberflächenemittierender Laser mit vertikalem Resonator (VCSEL) sind.

4. Optisches System (1) nach einem der vorhergehenden Ansprüche, wobei die Beleuchtungsquellen über den gesamten Umfang der Rahmenumrandung angeordnet sind.

5. Optisches System (1) nach einem der vorhergehenden Ansprüche, wobei die Kontaktlinse eine formstabile oder hybride Sklerallinse ist.

6. Optisches System (1) nach einem der vorhergehenden Ansprüche, wobei die Beleuchtungsquellen so angeordnet sind, dass sich, wenn der Rahmen und die Kontaktlinse von der Person getragen werden, ihre Lichtkegel an der Kontaktlinse mindestens teilweise überlappen.

7. Optisches System (1) nach einem der Ansprüche 1 bis 5, wobei die Beleuchtungsquellen so angeordnet sind, dass sie, wenn der Rahmen und die Kontaktlinse von der Person getragen werden, in einer Position, in der das Auge ins Unendliche blickt, auf einer zu der Mitte der Kontaktlinse tangentialen ebenen Oberfläche eine im Wesentlichen einheitliche Ausleuchtung erzeugen, wobei die Größe der Oberfläche gleich der Basis des größten Meniskus der Kontaktlinse ist.

8. Optisches System (1) nach einem der Ansprüche 1 bis 5, wobei die Beleuchtungsquellen jeweils eine Strahlformungsoptik beinhaltet, sodass sie, wenn der Rahmen und die Kontaktlinse von der Person getragen werden, jeweils einen zu einem Punkt der Kontaktlinse konzentrierteren Ausleuchtungsstrahl erzeugen.

9. Optisches System (1) nach einem der vorhergehenden Ansprüche, wobei die Photorezeptoren Photodioden sind, die für eine Strahlung im Infrarotbereich empfindlich sind.

10. Optisches System (1) nach einem der vorhergehenden Ansprüche, beinhaltend eine erste Gruppe von Photorezeptoren (30.1), die mindestens vier Photorezeptoren beinhaltet, die paarweise verteilt zu beiden Seiten und mit gleichem Abstand zu der Symmetrieachse (X) der Kontaktlinse angeordnet sind, welche dazu bestimmt ist, horizontal positioniert zu sein, wenn die Linse von dem Auge getragen wird,
wobei die vier Photorezeptoren der ersten Gruppe vorzugsweise zu beiden Seiten der Symmetrieachse (Y) der Kontaktlinse paarweise verteilt sind, welche dazu bestimmt ist, vertikal positioniert zu sein, wenn die Linse von dem Auge getragen wird.

11. Optisches System (1) nach einem der vorhergehenden Ansprüche, beinhaltend eine zweite Gruppe von Photorezeptoren (30.2), die mindestens drei Photorezeptoren beinhaltet, die nach der Symmetrieachse (Y) der Kontaktlinse ausgerichtet angeordnet sind, welche dazu bestimmt ist, vertikal positioniert zu sein, wenn die Linse von dem Auge getragen wird,
wobei mindestens zwei Photorezeptoren der zweiten Gruppe in dem oberen Teil der Kontaktlinse angeordnet sind.

12. Optisches System (1) nach einem der vorhergehenden Ansprüche, wobei sich über jedem Photorezeptor ein Farbfilter im Infrarotbereich (33) befindet.

13. Optisches System (1) nach einem der vorhergehenden Ansprüche, wobei die Verarbeitung durch den Prozessor der integrierten Schaltung die Berechnung der Baryzentren der Anteile der elektrischen Signale der Photodetektoren beinhaltet.

14. Optisches System (1) nach einem der vorhergehenden Ansprüche, wobei der drahtlose Kommunikationssender ein Modulator ist, der mit einer Funkfrequenz(RF)-Antenne oder einem Infrarotsender (IrDA) assoziiert ist.

15. Optisches System (1) nach einem der vorhergehenden Ansprüche, wobei der Rahmen Folgendes beinhaltet:
- einen drahtlosen Kommunikationsempfänger (21), der dazu angepasst ist, die durch den Sender der mindestens einen Kontaktlinse gesendeten Wellen zu empfangen;
- einen Prozessor (22) zur Verarbeitung der durch den Empfänger empfangenen Signale;
- vorzugsweise zwei Kontaktlinsen, die jeweils dazu bestimmt sind, von einem Auge der Person getragen zu werden, wobei die Verarbeitung des Signals durch den Prozessor des Rahmens dazu angepasst ist, die Informationen über Augenvergenz, Mitte und Richtung des Blicks in den Raum zu extrahieren.

## Claims

1. Optical system (1) for detecting and tracking the eye movements of an individual, comprising:
- a frame (2), intended to be worn on the face of the individual, comprising:
• a plurality of illumination sources (20),
- at least one contact lens (3), intended to be worn by an eye of the individual facing the frame, in which are encapsulated:
• an autonomous integrated circuit (32), incorporating a processor for processing the signals,
• a plurality of photoreceptors (30), suitable for being illuminated individually or not by the sources of the frame, the photoreceptors being electrically connected individually to the integrated circuit, the photoreceptors being arranged in the contact lens such that the processing by the processor of the signals transmitted by the photoreceptors makes it possible to know the relative positions and speeds of rotation of the eye and the blinking of the eyelid of the eye,
• a wireless communication transmitter (31), connected to the processor of the integrated circuit, for transmitting the signals processed by the processor of the integrated circuit and transferred to an external processor.

2. Optical system (1) according to Claim 1, the frame being a spectacle frame or a frame of an augmented reality headset or a head-up display (HUD) screen.

3. Optical system (1) according to Claim 1 or 2, the illumination sources being light-emitting diodes (LEDs) or vertical-cavity surface-emitting laser (VCSEL) diodes.

4. Optical system (1) according to one of the preceding claims, the illumination sources being arranged around the entire periphery of the frame rim.

5. Optical system (1) according to one of the preceding claims, the contact lens being a hard or hybrid scleral lens.

6. Optical system (1) according to one of the preceding claims, the illumination sources being arranged such that, when the frame and the contact lens are worn by the individual, their illumination cones at least partially overlap at the contact lens level.

7. Optical system (1) according to one of Claims 1 to 5, the illumination sources being arranged such that, when the frame and the contact lens are worn by the individual, they create a substantially uniform illumination over a planar surface tangent to the centre of the contact lens in a position of the eye fixed on infinity, the size of the surface being equivalent to the base of the largest meniscus of the contact lens.

8. Optical system (1) according to one of Claims 1 to 5, the illumination sources each comprising a shaping optic such that, when the frame and the contact lens are worn by the individual, they each create a light beam that is more concentrated towards a point on the contact lens.

9. Optical system (1) according to one of the preceding claims, the photoreceptors being photodiodes sensitive to radiation in the infrared.

10. Optical system (1) according to one of the preceding claims, comprising a first group of photoreceptors (30.1), comprising at least four photoreceptors arranged by being distributed in pairs on either side of and at an equal distance from the axis of symmetry (X) of the contact lens, which is intended to be positioned horizontally when the lens is worn by the eye,
the four photoreceptors of the first group preferably being distributed in pairs on either side of the axis of symmetry (Y) of the contact lens, which is intended to be positioned vertically when the lens is worn by the eye.

11. Optical system (1) according to one of the preceding claims, comprising a second group of photoreceptors (30.2), comprising at least three photoreceptors arranged by being aligned along the axis of symmetry (Y) of the contact lens, which is intended to be positioned vertically when the lens is worn by the eye,
at least two photoreceptors of the second group being arranged in the upper portion of the contact lens.

12. Optical system (1) according to one of the preceding claims, the photoreceptors each being surmounted by an infrared chromatic filter (33).

13. Optical system (1) according to one of the preceding claims, the processing by the processor of the integrated circuit comprising the calculation of the centres of mass of the contributions of the electrical signals from the photodetectors.

14. Optical system (1) according to one of the preceding claims, the wireless communication transmitter being a modulator associated with a radiofrequency (RF) antenna or an infrared (IrDA) transmitter.

15. Optical system (1) according to one of the preceding claims, the frame comprising:
- a wireless communication receiver (21) suitable for receiving the waves transmitted by the transmitter of said at least one contact lens;
- a processor (22) for processing the signals received by the receiver;
- preferably, two contact lenses, each intended to be worn by an eye of the individual, the processing of the signal by the processor of the frame being suitable for extracting the information on ocular vergence, on the centre and on the direction of the gaze in space.
